# EUROPEAN PATENT APPLICATION

(11) **EP 4 513 193 A1**
(43) Date of publication of application: **26.02.2025**
(21) Application number: 23790219.2
(22) Date of filing: 17.02.2023
(51) Int. Cl.: G01N 35/02

(54) **CONTAINER STORAGE DEVICE AND AUTOMATIC ANALYSIS SYSTEM**

(30) Priority: 18.04.2022 JP 2022068149
(71) Applicant: HITACHI HIGH-TECH CORPORATION, Tokyo 105-6409 (JP)
(72) Inventor: MUKAIYAMA Naoki, Tokyo 105-6409 (JP); MURAMATSU Yoshiki, Tokyo 105-6409 (JP)
(74) Representative: MERH-IP Matias Erny Reichl Hoffmann Patentanwälte PartG mbB
(86) International application number: PCT/JP2023/005622
(87) International publication number: WO 2023/203854

(57) **Abstract**

Provided are a container storage device and an automatic analysis system that can maintain not only a power-free unit but also a power-requiring unit. The container storage device for storing a container includes a plurality of mechanisms having a predetermined function and a control unit configured to control the mechanisms. The mechanisms include the power-requiring unit that requires power supply for maintenance and the power-free unit that does not require power supply for maintenance. The control unit cuts off communication with the power-requiring unit and the power-free unit and stops the power supply, and when the power-requiring unit is maintained, the control unit restarts the power supply to the power-requiring unit while cutting off the communication.

## Description

### Technical Field

The invention relates to a container storage device and an automatic analysis system.

### Background Art

An automatic analysis system includes an automatic analyzer that analyzes a specific component contained in a specimen such as blood or urine, various pretreatment devices that perform various types of pretreatment on the specimen, and a transport device that transports a specimen container containing the specimen to the automatic analyzer. In order to reduce downtime of the automatic analysis system, it is desirable that another device, for example, a transport device is operable during maintenance of a certain device among a plurality of devices. In each device as well, it is desirable that the other mechanisms can operate while maintaining a specific mechanism.

PTL 1 discloses that in a specimen treatment device including a plurality of mechanisms each having one function, power supply to a specific mechanism is stopped and power supply to another mechanism is continued, whereby the other mechanism can be operated while the specific mechanism is under maintenance.

### Citation List

### Patent Literature

PTL 1: JP6453078

### Summary of Invention

### Technical Problem

However, it is not considered in PTL 1 to maintain a mechanism, to which power supply is stopped, while operating a specific unit thereof. The mechanism includes a power-requiring unit that is to be maintained while operating by being supplied with power, and a power-free unit that is to be maintained without operating. When power supply to the specific mechanism is stopped, the power-requiring unit cannot be maintained.

Therefore, an object of the invention is to provide a container storage device and an automatic analysis system that can maintain not only a power-free unit but also a power-requiring unit.

### Solution to Problem

In order to achieve the above object, the invention provides a container storage device for storing a container, the container storage device including a plurality of mechanisms having a predetermined function and a control unit configured to control the mechanisms. The mechanisms include a power-requiring unit that requires power supply for maintenance and a power-free unit that does not require power supply for maintenance. The control unit cuts off communication with the power-requiring unit and the power-free unit and stops the power supply, and when the power-requiring unit is maintained, the control unit restarts the power supply to the power-requiring unit while cutting off the communication.

Further, the invention provides an automatic analysis system in which the container storage device is located between an automatic analyzer configured to analyze a specimen and a transport device configured to transport the specimen.

### Advantageous Effects of Invention

According to the invention, it is possible to provide a container storage device and an automatic analysis system that can maintain not only a power-free unit but also a power-requiring unit.

### Brief Description of Drawings

[FIG. 1] FIG. 1 is a diagram illustrating a configuration example of an automatic analysis system according to a first embodiment.
[FIG. 2] FIG. 2 is a diagram illustrating a configuration example of a quality control specimen storage device.
[FIG. 3] FIG. 3 is a diagram illustrating an example in which the quality control specimen storage device is connected to another device.
[FIG. 4] FIG. 4 is a diagram illustrating another example in which the quality control specimen storage device is connected to another device.
[FIG. 5] FIG. 5 is a diagram illustrating a configuration example according to the first embodiment.
[FIG. 6] FIG. 6 is a diagram illustrating an example of a flow of processing according to the first embodiment.
[FIG. 7] FIG. 7 is a diagram illustrating a configuration example according to a second embodiment.
[FIG. 8] FIG. 8 is a diagram illustrating a configuration example according to a third embodiment.

### Description of Embodiments

Hereinafter, embodiments of a container storage device and an automatic analysis system will be described with reference to the accompanying drawings.

### First Embodiment

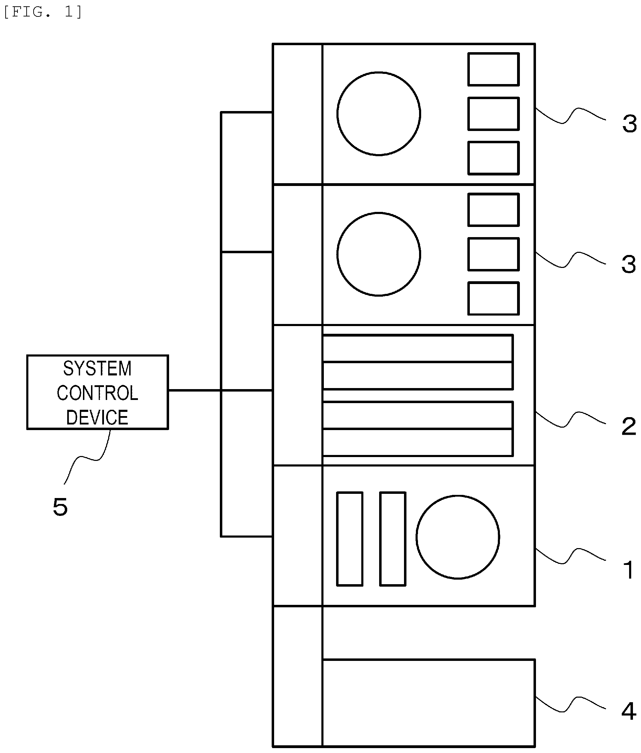

A configuration example of an automatic analysis system according to a first embodiment will be described with reference to FIG. 1. The automatic analysis system illustrated in FIG. 1 includes an automatic analyzer 3, an input and collection device 2, a quality control specimen storage device 1, a transport device 4, and a system control device 5.

The automatic analyzer 3 is a device configured to automatically analyze a specific component contained in a specimen such as blood or urine supplied from a patient. The input and collection device 2 is a device in which a specimen container containing a specimen is input or collected. The quality control specimen storage device 1 is a device configured to store a specimen container containing a quality control specimen. The quality control specimen is a specimen used to control the analysis quality of the automatic analyzer 3. The transport device 4 is a device configured to transport a specimen container to the automatic analyzer 3, the input and collection device 2, and the quality control specimen storage device 1.

The system control device 5 is a device that controls the automatic analyzer 3, the input and collection device 2, and the quality control specimen storage device 1, and is implemented by a computer, for example. An input and output device such as a keyboard, a mouse, a monitor, or a touch panel may be connected to the system control device 5. With the input and output device, an operation condition of the automatic analysis system is input or an operation state is displayed.

The automatic analysis system may be provided with a pretreatment device that performs pretreatment such as centrifugation of blood, opening and closing of a specimen container, dispensing for subdividing a specimen, and sticking a label to a specimen container. The input and collection device 2, the quality control specimen storage device 1, the automatic analyzer 3, and the pretreatment device include a plurality of mechanisms having a predetermined function and a control unit configured to control the mechanisms. In the embodiment, the description is made in which the quality control specimen storage device 1 is a container storage device, and the invention can be applied, as the container storage device, to the input and collection device 2, the automatic analyzer 3, and the pretreatment device that temporarily stores a container containing a liquid such as a specimen and reagent.

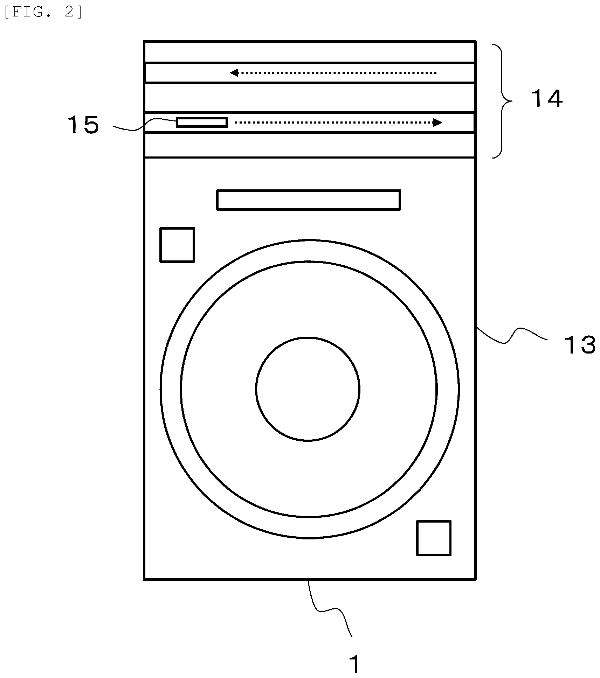

A configuration example of the quality control specimen storage device 1 will be described with reference to FIG. 2. The quality control specimen storage device 1 includes a storage mechanism 13 and a transport mechanism 14. The storage mechanism 13 is a mechanism having a function of storing a specimen container 15 that contains a quality control specimen, and includes a refrigerator that cold-insulates a plurality of specimen containers 15 at a predetermined temperature. The transport mechanism 14 is a mechanism having a function of transporting the specimen container 15, and includes a main line configured to transport the specimen container 15 in a first direction and a return line configured to transport the specimen container 15 in a direction opposite to the first direction. The quality control specimen storage device 1 is coupled to another device via thee transport mechanism 14.

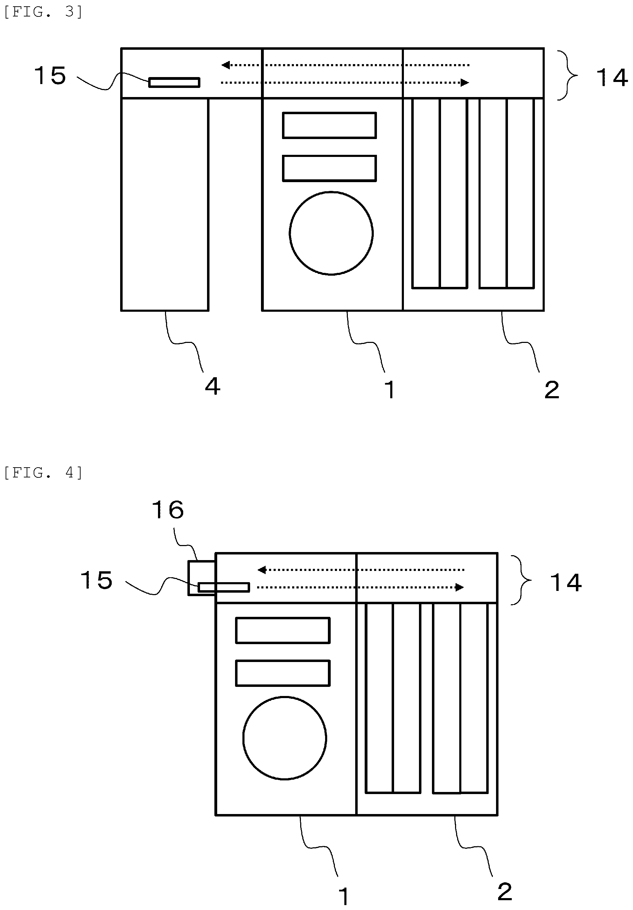

FIG. 3 illustrates a configuration example in which the quality control specimen storage device 1 is coupled between the transport device 4 and the input and collection device 2. The specimen container 15 is transported from the transport device 4 to the input and collection device 2 via the quality control specimen storage device 1 by the main line, and is transported from the input and collection device 2 to the transport device 4 via the quality control specimen storage device 1 by the return line.

FIG. 4 illustrates a configuration example in which the quality control specimen storage device 1 is coupled only to the input and collection device 2. The specimen container 15 input from an emergency specimen inlet 16 by an operator is transported from the quality control specimen storage device 1 to the input and collection device 2 by the main line, and is transported from the input and collection device 2 to the quality control specimen storage device 1 by the return line.

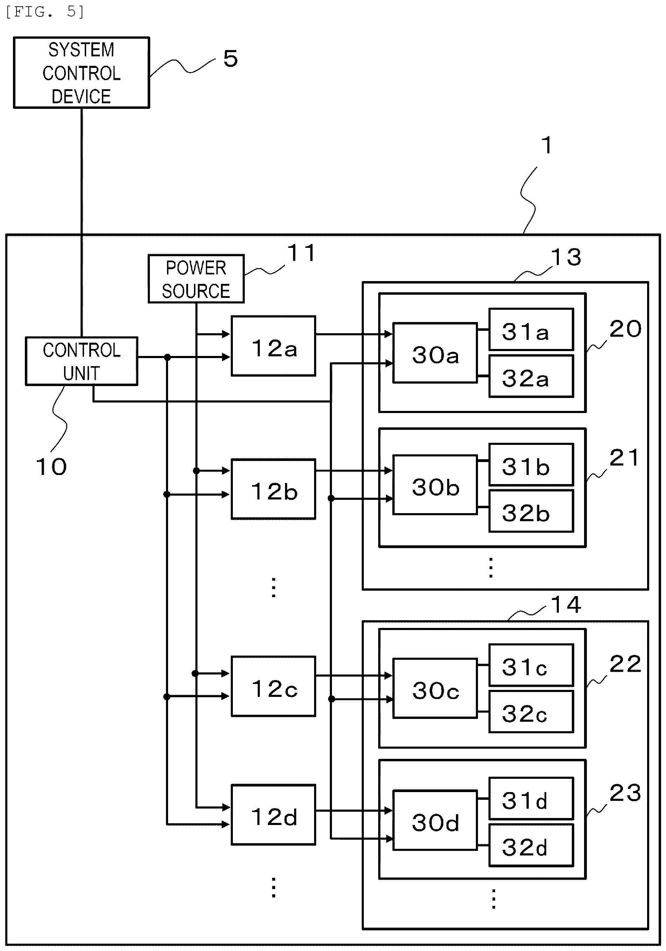

With reference to FIG. 5, a detailed configuration of the container storage device of the first embodiment will be described with the quality control specimen storage device 1 as an example. The quality control specimen storage device 1 includes the storage mechanism 13 and the transport mechanism 14, and includes a control unit 10, a power source 11, and power source switching units 12a to 12d. The storage mechanism 13 includes a cold disk drive unit 20, a refrigerant shutter unit 21, and the like. The transport mechanism 14 includes a transfer line unit 22, a main line unit 23, and the like. Further, the units include control boards 30a to 30d, actuators 31a to 31d, and sensors 32a to 32d.

The control unit 10 is a device configured to control an operation of each unit in accordance with a control signal transmitted from the system control device 5, and is, for example, a micro-processor unit (MPU). The power source 11 is a device configured to supply power to the units via the power source switching units 12a to 12d, and is a converter that converts a commercial voltage into a DC voltage, for example. The power source switching units 12a to 12d are circuits configured to switch whether to continue or stop the power supply from the power source 11 in accordance with a control signal transmitted from the control unit 10.

The cold disk drive unit 20 is a unit configured to rotationally drive a cold disk on which a specimen container is placed and which is provided in the refrigerator. The rotational drive of the cold disk is performed by operating the actuator 31a according to a control signal from the control board 30a and causing the sensor 32a to detect a position of the cold disk. The maintenance of the cold disk drive unit 20 includes position adjustment in a rotational direction, and thus it is necessary to supply power for rotationally driving the cold disk. That is, the cold disk drive unit 20 is a power-requiring unit that requires power supply for maintenance.

The refrigerant shutter unit 21 is a unit configured to drive a shutter that opens and closes an opening of the refrigerator. The opening and closing of the shutter is performed by operating the actuator 31b according to a control signal from the control board 30b and causing the sensor 32b to detect the shutter. The maintenance of the refrigerant shutter unit 21 only involves replacement of components and cleaning, and thus power supply is not necessary. That is, the refrigerant shutter unit 21 is a power-free unit that does not require power supply for maintenance.

The transfer line unit 22 is a unit configured to transfer the specimen container between the lines through which the specimen container is transported, and is a power-requiring unit since the maintenance thereof includes positional adjustment in a horizontal direction and requires power supply.

The main line unit 23 is a unit configured to transport the specimen container in the first direction, and is a power-free unit since the maintenance thereof only involves replacement of components and cleaning and does not require power supply.

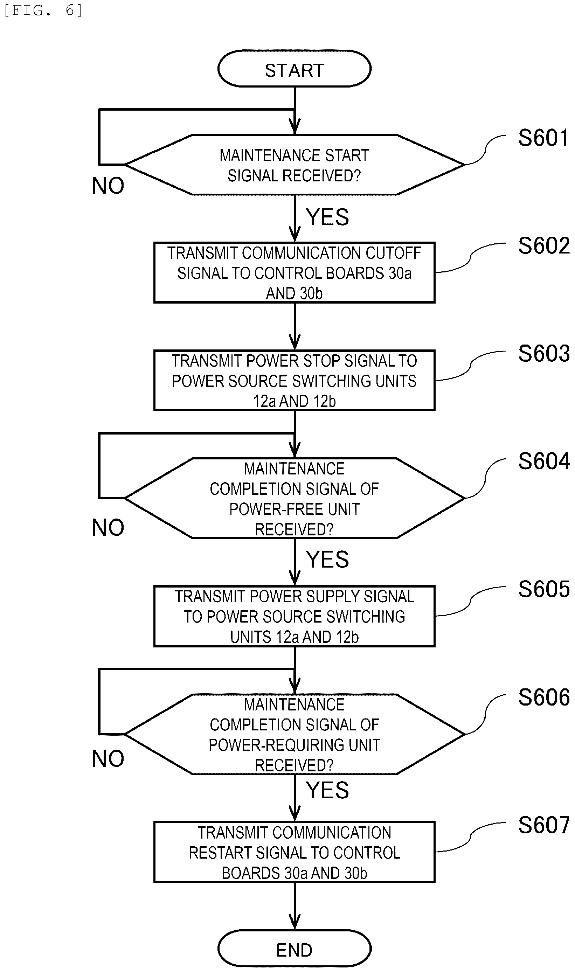

An example of a flow of maintenance processing executed on the quality control specimen storage device 1 will be described for each step with reference to FIG. 6.

### (S601)

The control unit 10 determines whether a maintenance start signal is received. S601 is repeated until the maintenance start signal is received. When the maintenance start signal is received, the process proceeds to S602. The maintenance start signal is transmitted from the system control device 5, which receives a maintenance start operation performed by the operator, to the control unit 10.

### (S602)

The control unit 10 transmits a communication cutoff signal to the control boards 30a and 30b to stop a normal operation of the storage mechanism 13.

### (S603)

The control unit 10 transmits a power stop signal to the power source switching units 12a and 12b, and stops power supply from the power source 11 to the storage mechanism 13. Due to the cutoff of communication between the control unit 10 and the storage mechanism 13 in S602 and the stop of power supply to the storage mechanism 13 in S603, the storage mechanism 13 is in a state in which the maintenance can be performed, and the refrigerant shutter unit 21 that is a power-free unit is maintained. The cold disk drive unit 20, which is a power-requiring unit, is in a state in which the maintenance can be performed after power supply is restarted. Since communication between the control unit 10 and the transport mechanism 14 is not cutoff and power supply to the transport mechanism 14 is not stopped, the transport mechanism 14 operates normally.

### (S604)

The control unit 10 determines whether a maintenance completion signal of the power-free unit is received. S604 is repeated until the maintenance completion signal is received. When the maintenance completion signal is received, the process proceeds to S605. The maintenance completion signal is transmitted from the system control device 5, which receives a maintenance completion operation performed by the operator, to the control unit 10.

### (S605)

The control unit transmits a power supply signal to the power source switching units 12a and 12b, and restarts the power supply from the power source 11 to the storage mechanism 13. Due to the restart of the power supply to the storage mechanism 13 in S605, the cold disk drive unit 20, which is a power-requiring unit, is in a state in which the maintenance can be performed. In the control boards 30a to 30d, a program for performing a specialized operation when the power-requiring unit is maintained is executed. The program may be stored in a portable recording medium such as an SD card, and may be executed when the portable recording medium is inserted into the control boards 30a to 30d.

### (S606)

The control unit 10 determines whether a maintenance completion signal of the power-requiring unit is received. S606 is repeated until the maintenance completion signal is received. When the maintenance completion signal is received, the process proceeds to S607. The maintenance completion signal is transmitted from the system control device 5, which receives a maintenance completion operation performed by the operator, to the control unit 10.

### (S607)

The control unit 10 transmits a communication restart signal to the control boards 30a and 30b, and restarts a normal operation of the storage mechanism 13.

According to the processing flow described with reference to FIG. 6, not only the power-free unit of the storage mechanism 13 but also the power-requiring unit can be maintained. Since the transport mechanism 14 can be normally operated during the maintenance of the storage mechanism 13, the downtime of the automatic analysis system can be reduced.

### Second Embodiment

In the first embodiment, the description is made in which a maintenance program of the power-requiring unit stored in a portable recording medium is executed by the control boards 30a to 30d. In a second embodiment, description will be made in which an external PC storing the maintenance program of the power-requiring unit is connected to each of the control boards 30a to 30d.

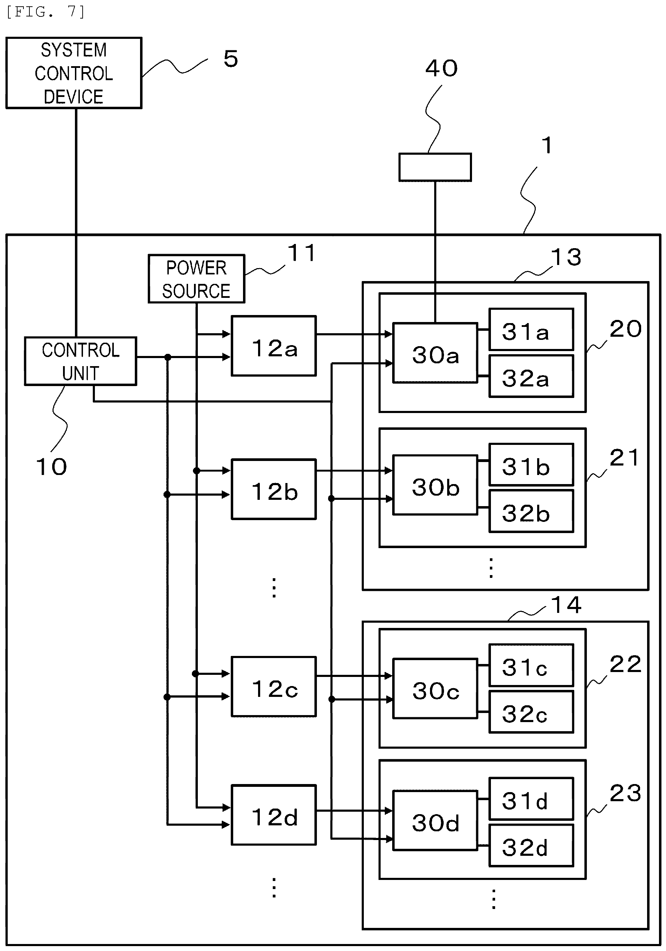

A detailed configuration of the second embodiment will be described with reference to FIG. 7. In FIG. 7, an external PC 40 is added to the configuration in FIG. 5, and thus the external PC 40 will be described. The external PC 40 is, for example, a notebook computer, and stores a program for performing a specialized operation when the power-requiring unit is maintained. The external PC 40 is used by being connected to a unit to be maintained, for example, the control board 30a of the cold disk drive unit 20.

A flow of maintenance processing in the second embodiment is based on that in the first embodiment. That is, in a state where communication between the control unit 10 and the storage mechanism 13 is cut off and power supply to the storage mechanism 13 is stopped, the refrigerant shutter unit 21, which is a power-free unit, is maintained. The transport mechanism 14 operates normally. Then, after the power supply to the storage mechanism 13 is restarted, the maintenance program stored in the external PC 40 connected to the control board 30a is executed to maintain the cold disk drive unit 20 that is the power-requiring unit. When the maintenance of the power-free unit and the power-requiring unit is completed, the communication between the control unit 10 and the storage mechanism 13 is restarted, and the storage mechanism 13 returns to the normal operation.

According to the second embodiment, similarly to the first embodiment, not only the power-free unit but also the power-requiring unit can be maintained, and since another mechanism can operate normally during the maintenance, the downtime of the automatic analysis system can be reduced.

### Third Embodiment

In the second embodiment, the description is made in which the external PC 40 storing the maintenance program of the power-requiring unit is connected to each of the control boards 30a to 30d. In a third embodiment, description will be made in which the external PC 40 and the control boards 30a to 30d are connected via a switching hub.

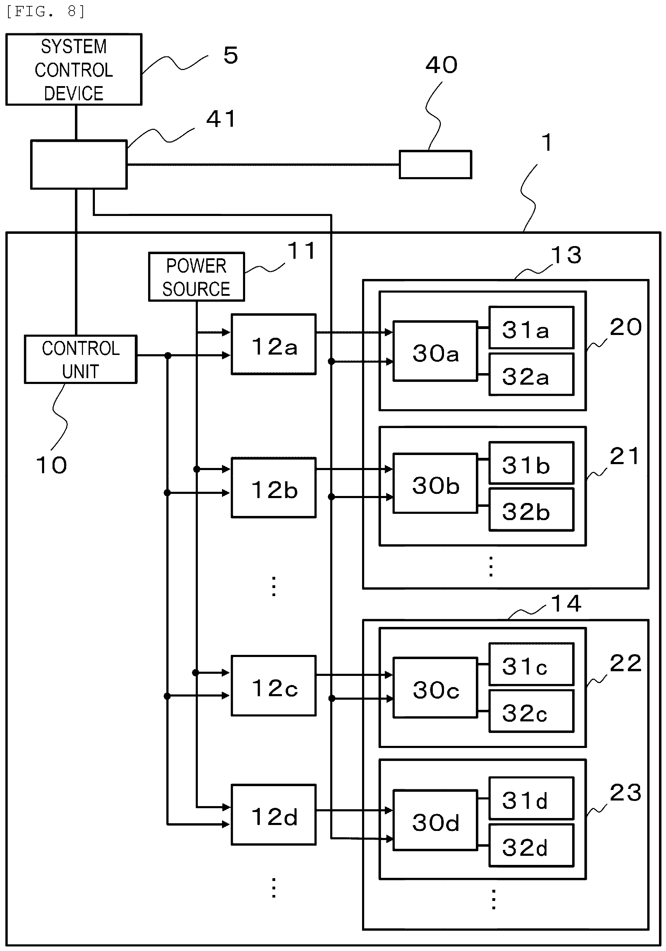

A detailed configuration of the third embodiment will be described with reference to FIG. 8. In FIG. 8, a switching hub 41 is added to the configuration in FIG. 7, and thus the switching hub 41 will be described. The switching hub 41 is a circuit configured to switch a transmission destination of a control signal, is installed between the system control device 5 and the control unit 10, and is connected to all control boards 30a to 30d. For example, when maintaining the quality control specimen storage device 1, the external PC 40 in which the maintenance program is stored is connected to the switching hub 41. Then, the switching hub 41 performs switching so that the unit to be maintained, for example, the control board 30a of the cold disk drive unit 20 is the transmission destination of the control signal.

A flow of the maintenance processing in the third embodiment is also based on that in the first embodiment. That is, in a state where communication between the control unit 10 and the storage mechanism 13 is cut off and power supply to the storage mechanism 13 is stopped, the refrigerant shutter unit 21, which is a power-free unit, is maintained. The transport mechanism 14 operates normally. Then, after the power supply to the storage mechanism 13 is restarted, the maintenance program stored in the external PC 40 connected to the control board 30a via the switching hub 41 is executed to maintain the cold disk drive unit 20 that is the power-requiring unit. When the maintenance of the power-free unit and the power-requiring unit is completed, the communication between the control unit 10 and the storage mechanism 13 is restarted, and the storage mechanism 13 returns to the normal operation.

According to the third embodiment, similarly to the first embodiment, not only the power-free unit but also the power-requiring unit can be maintained, and since another mechanism can operate normally during the maintenance, the downtime of the automatic analysis system can be reduced. Since the switching hub 41 is used, it is not necessary to reconnect the external PC 40 every time the unit to be maintained changes, and thus the labor of the operator can be reduced.

The embodiments of the invention have been described above. The invention is not limited to the above-described embodiments, and the components may be modified without departing from the gist of the invention. The plurality of components disclosed in the above-described embodiments may be combined as appropriate. Further, some components may be deleted from all the components disclosed in the above-described embodiments.

### Reference Signs List

1 quality control specimen storage device
2 input and collection device
3 automatic analyzer
4 transport device
5 system control device
10 control unit
11 power source
12a to 12d power source switching unit
13 storage mechanism
14 transport mechanism
15 specimen container
16 emergency specimen inlet
20 cold disk drive unit
21 refrigerant shutter unit
22 transfer line unit
23 main line unit
23 main line unit
30a to 30d control board
31a to 31d actuator
32a to 32d sensor
40 maintenance PC
41 switching hub

## Claims

1. A container storage device for storing a container, the container storage device comprising:
a plurality of mechanisms having a predetermined function; and
a control unit configured to control the mechanisms, wherein
the mechanisms include a power-requiring unit that requires power supply for maintenance, and a power-free unit that does not require power supply for maintenance, and
the control unit cuts off communication with the power-requiring unit and the power-free unit, and stops the power supply, and when the power-requiring unit is maintained, the control unit restarts the power supply to the power-requiring unit while cutting off the communication.

2. The container storage device according to claim 1, wherein
the power-requiring unit is maintained after the power-free unit is maintained.

3. The container storage device according to claim 1, wherein
the power-requiring unit is maintained by executing a program for performing a specialized operation when the power-requiring unit is maintained.

4. The container storage device according to claim 3, wherein
the program is stored in a computer connected to the power-requiring unit.

5. The container storage device according to claim 4, wherein
the computer is connected to the power-requiring unit via a switching hub configured to switch a transmission destination of a control signal.

6. The container storage device according to claim 1, further comprising:
a storage mechanism having a function of storing a specimen container in which a quality control specimen is contained; and
a transport mechanism having a function of transporting the specimen container.

7. The container storage device according to claim 6, wherein
the storage mechanism includes the power-requiring unit and the power-free unit, and is maintained when the transport mechanism operates.

8. An automatic analysis system, wherein
the container storage device according to claim 1 is located between an automatic analyzer configured to analyze a specimen and a transport device configured to transport the specimen.
